# EUROPEAN PATENT SPECIFICATION

(11) **EP 3 084 550 B1**
(45) Date of publication and mention of the grant of the patent: **24.06.2020**
(21) Application number: 14805730.0
(22) Date of filing: 07.11.2014
(51) Int. Cl.: G06F 1/16

(54) **DOCKING SYSTEM**
ANDOCKSYSTEM
SYSTÈME D'ACCUEIL

(30) Priority: 16.12.2013 IN 5840CH2013
(43) Date of publication of application: 26.10.2016
(73) Proprietor: Amphenol Thermometrics, Inc., Saint Mary's, PA 15857-3397 (US)
(72) Inventor: DARSHAN, Santosh, Hyderabad Andhra Pradesh 500081 (IN)
(74) Representative: P&TS SA (AG, Ltd.)
(86) International application number: PCT/US2014/064470
(87) International publication number: WO 2015/094508

(56) References cited:
- US-A1- 2011 117 833
- US-A1- 2012 299 547
- US-A1- 2013 058 065

## Description

### FIELD OF THE INVENTION

The invention relates generally to docking system and more specifically to, a docking system for portable device for use in thermal validator.

### BACKGROUND OF THE INVENTION

Generally a validator system is a standalone thermal validation system that simplifies the entire validation process by reducing set-up time, minimizing sensor handling, and presenting critical study data in easily customized report formats. Typically the docking system consists of a central processing unit (or an input-output module), a power supply, and data storage devices, incorporated into the main single body with an integrated screen with buttons for input. Sometimes, a touch screen panel could also be employed which does both the input as well as the display (output) functions. The rear side of the docking station typically has several input / output docks to connect to various sensors, computer and peripherals.

However, this type of system lacks flexibility due to the integrated screen / hardware combination. Flexibility constraints may be understood as flexibility with respect to size and shape of display. In addition, there is a limitation on the viewing angle of the screen since it is restricted by the fixed position of the screen with respect to the docking station. Sometimes when a separate computing device is required in addition to the integrated screen, this apart from occupying more space vastly reduces the portability of the device.

Tablet computers may intend to overcome these limitations, since tablets are typically slim, slate-like devices that may use detachable or desktop keyboards and mice. What makes the tablet unique is their integration of touch (hand / stylus) and speech input capabilities with state-of-the-art laptop capabilities. However, this tablet computer when used with an input output module of a thermal validator it still needs a docking space separate from the I/O module.

Hence, there is a need to design a docking system for a portable device like tablet computer to be used with an input-output module which addresses the aforementioned issues.

US2012/0299547 discloses an apparatus used to hold a portable device.

### BRIEF DESCRIPTION OF THE INVENTION

In accordance with one embodiment, of the invention, a docking system for a portable device is provided. The docking system for a portable device is for use in thermal validator system. The docking system allows the use of tablet computer (as portable device) with an input-output module of the thermal validator system.

The docking system includes a housing assembly, a locking subsystem and a retaining member. The locking subsystem is provided on the housing assembly for locking and unlocking the portable device when disposed inside the housing assembly. The retaining member couples the housing assembly to an input-output module.

The retaining member employs a friction hinge, which is mounted between the housing assembly and the reatining member. This allows a multiple viewing orientation for the tablet computer when it is housed within the housing assembly. The user may manually adjust the tablet computer to his comfortable viewing angle.

The housing assembly is partially disposed within the input-output module and the tablet computer is Furthermore, received by the housing assembly through a guide plate and dowel guide(s). This presents advantage in the present invention by preventing an incorrect engagement of the tablet computer to the housing assembly connector.

In accordance to one embodiment of the present invention, the locking subsystem includes a switching means and an actuating lever having a snap for locking the tablet computer, wherein the actuation of the switching means unlocks the portable device from the actuating lever. The present invention discourages unwanted removal of the tablet computer from the housing assembly, this is achieved by the locking subsystem which forms an integral part of the housing assembly.

In acordance with another embodiment, of the present invention, a docking system includes a front enclosure portion, which is formed by a front wall, a side wall and a back wall. The front wall extends obliquely downward and rearward towards the back wall to form a U shaped structure. Furthermore, a back cover is provided on the backside of the front enclosure portion.

Yet, in accordance with another embodiment, of the present invention, a method of assembling a docking system includes the steps of securing a locking subsystem securing a locking sub-system to a front enclosure portion; securing a back cover to said front enclosure portion; installing a stiffening member to said front enclosure portion; and fixing at least one friction hinge between the stiffening member and at least one retaining member, wherein the other end of the retaining member is mounted to an input-output module.

Furthermore, in accordance with another embodiment, of the present invention a method for securing a portable device, includes the steps of sliding the portable device in a housing assembly; guiding the portable device in said housing assembly; and locating the portable device in said housing assembly.

The present invention provides a major advantage by allowing the users to interface with a tablet computer which may be easily mounted and removed from to the input-output module. This also provides the benefits in terms of portability and compactness.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a front elevation view of a docking system including an input-output module and a housing assembly in accordance with embodiments of the invention;
FIG. 2 is a front isometric view of the input-output module in FIG.1 accordance with embodiments of the invention;
FIG. 3 is a front isometric view of the housing assembly in FIG.1 in accordance with embodiments of the invention;
FIG. 4 is a rear isometric view of the housing assembly in FIG.1 in accordance with embodiments of the invention;
FIG. 5 is a bottom view of the housing assembly in FIG.1 in accordance with embodiments of the invention;
FIG. 6 is a sectional view of a first section 76 of FIG. 4 in accordance with embodiments of the invention;
FIG. 7 is a sectional view of a second section 78 of FIG. 4 in accordance with embodiments of the invention;
FIG.8 is a rear view of the front enclosure portion in FIG. 3 without a back cover in accordance with embodiments of the invention;
FIG.9 is a rear isometric view of the housing assembly in FIG.1 with retaining spring in accordance with embodiments of the invention;
FIG. 10 is an exploded view of the housing assembly in FIG.1 in accordance with embodiments of the invention;
FIG.11 is a flowchart representing the steps in an exemplary method of assembling the housing assembly in accordance with embodiments of the invention;
FIG. 12 is a flowchart representing the steps in an exemplary method of securing the portable device in accordance with embodiments of the invention;

### DETAILED DESCRIPTION OF THE INVENTION

As discussed in detailed below, in the present invention a docking system for a portable device is provided. The docking system comprises a housing assembly to be disposed partially within an input-output module and is mechanically operable between a multiple of viewing angles. At least one retaining member is used for coupling said housing assembly to said input - output module. The housing assembly is adapted to receive a portable device within it. Furthermore, a locking sub-system is provided on said housing assembly for locking said portable device to said housing assembly. The portable device which is a tablet computer has a multiple of contact positioned in the midway of the tablet to facilitate aligning the tablet to the housing assembly.

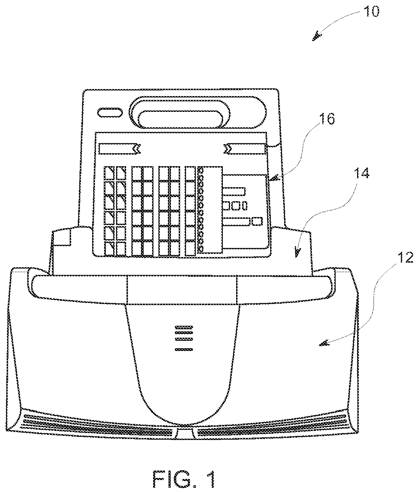

FIG. 1 is a diagrammatic illustration of a front elevation view of a docking system 10. The docking system 10 includes an input-output module 12, a housing assembly 14 and a portable device 16. The portable device hereinafter will be referred to as tablet computer. In a particular embodiment,, the input-output module accommodates multiple of sensor inputs and may accept any combination of thermocouple, voltage or current inputs such as humidity and pressure transducers. Furthermore, the input-output module is adapted for processing and monitoring various inputs. The housing assembly 14 is secured to the input-output module 12, such that the housing assembly 14 is disposed partially within the input-output module 12. The tablet computer 16 is furthermore disposed within the housing assembly 14 and is mechanically operated along with the housing assembly 14 for multiple of the viewing angles.

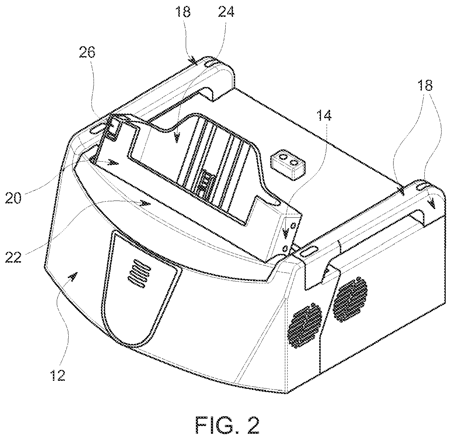

FIG. 2 is a front isometric view of an input-output module 12 with the housing assembly 14 in FIG.1. In the illustrated example the input-output module 12 as referenced in FIG.1 holds the housing assembly 14. The input-output module is provided with at least two handles 18 on the top surface 22 of the input-output module 16. The housing assembly 14 is partially disposed in the input-output module 12, wherein a front surface 20 of the housing assembly 14 extends beyond the top surface 22 of the input-output module 12.The housing assembly back side 24 extends much beyond the top edge of the front surface 20, such that it provides back support to the tablet computer 16 in FIG.1. A locking subsystem 26 is provided on the housing assembly 14 for locking and unlocking the tablet computer 16. In a particular embodiment,, the locking subsystem 26 is disposed on one extreme side of the housing assembly 14.

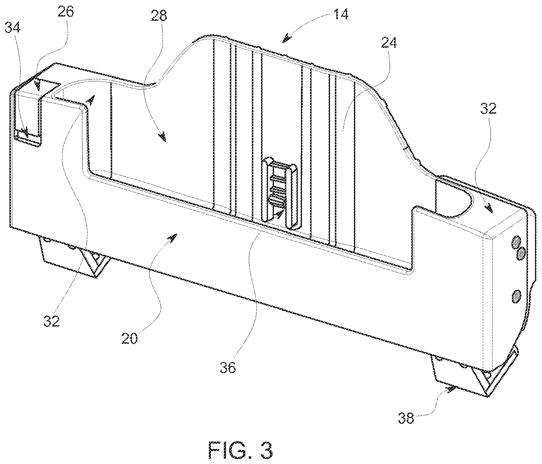

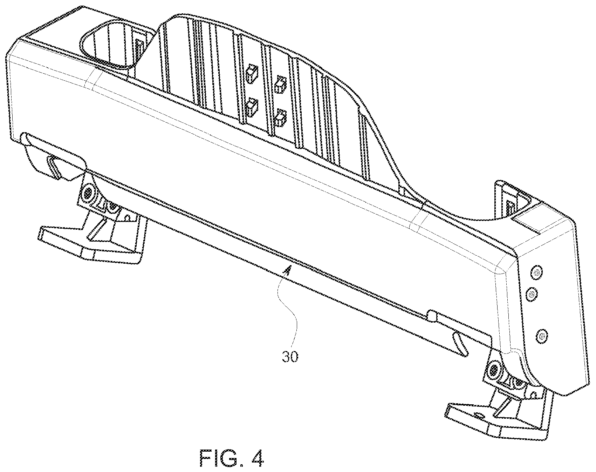

FIG. 3 is a front isometric view of the housing assembly 14 in FIG.1. The housing assembly 14 includes a front enclosure portion 28 and FIG. 3 is a front isometric view of a housing assembly back cover 30 shown in FIG.4. The front enclosure portion 28 is formed by front wall 20 (which is also referred as front surface in FIG.2), side wall(s) 32 and back wall 24 (which is also referred as back side in FIG.2). The front enclosure portion 28 is made in U shaped structure to house the table computer 16 within it. In an illustrated example the housing assembly is made up of plastic. The front wall 20 is cut in a U shape structure. The side wall 32 is provided with a recess 34 to dispose the locking subsystem 26 in it. The back wall 24 as a back support for the tablet computer 16 is provided with a guide plate 36 in the midway portion of the back wall 24. The guide plate 36 guides the tablet computer 16 while getting inserted in the front enclosure portion 28. In one embodiment, the guide plate 36 is a plate like structure with multiple of sliders and a see through hole for enabling the locking of the tablet computer 16. The guide plate 36 may be varied in many ways as known in the art for the purpose of this invention. The guide plate 36 may be either integrated to the back wall 24 or may exist as a separate part. Furthermore the guide plate 36 may be of plastic or metal depending on the various requirements. The number of guide plates 36 is dependent on the tablet computer 16 design.

In an exemplary embodiment, the front wall 20, the side wall 32 and the back wall 24 is integrated into one piece to form the front enclosure portion 28. The housing assembly 14 is coupled to the input- output module 12 through two retaining members 38. In one embodiment, the retaining members are indirectly secured to the base of the front enclosure portion 28. The retaining member(s) 38 is a L shaped structure when viewed from the side. The retaining member 38 is preferably screwed to the input-output module 12 whereby the housing assembly rigidly stays partially within the input-output module. The retaining member 38 is provided with multiple of see through provisions for securing by various known means in the art.

As seen in FIG. 4 the back cover 30 is disposed on the back side of the front enclosure portion 28. Part of the locking subsystem 26 extends on the backside of the front enclosure portion, which is covered by the back cover 30 for antitheft and aesthetic reasons and is secured by any known means. The structure of the back cover 30 may be varied in many ways depending on the requirements for the purpose of this invention.

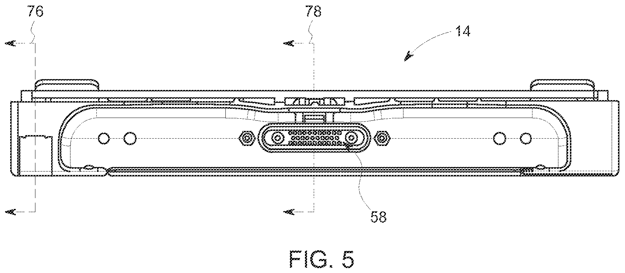

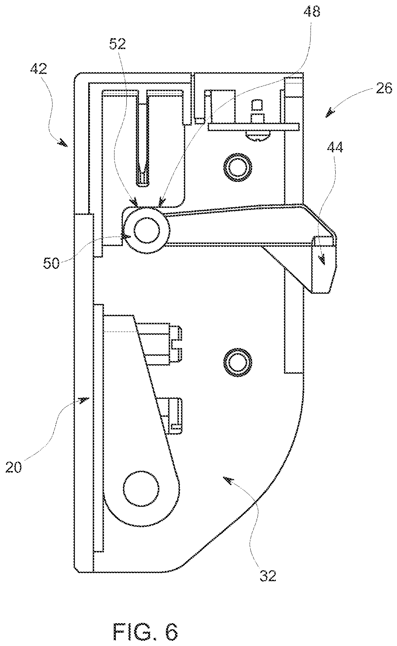

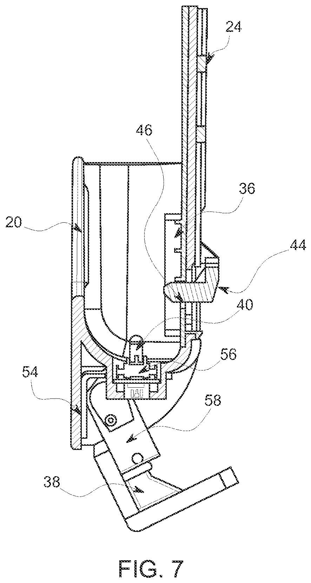

FIG. 5 is a bottom view of the housing assembly in FIG.1. FIG.5 illustrates two different sections taken at two different locations of the housing assembly. The first section 76 is furthermore, illustrated in FIG.6, the second section 78 is furthermore illustrated in FIG. 7.

FIG. 6 is sectional view of the first section 76 marked in FIG. 5. FIG. 6 illustrates a locking subsystem 26 referred in FIG. 2. The locking subsystem 26 includes a switching means 42 and an actuating lever 44 having a snap 46 (shown in FIG. 7) for locking the portable device 16, wherein the actuation of the switching means 42 unlocks the portable 16 device from the actuating lever 44. In one embodiment, the switching means 42 is a push button. The switching means 42 connects with the actuating lever 44 with rolling element 48 and pin 50. When the push button 42 is pushed down it is guided against the side wall 32. The push button 42 is provided with two parallel recesses for the two corresponding ribs on the side wall 32 for proper guiding. Furthermore, when the push button 42 is pressed, the lower end 52 of the push button 42 exerts downward force on the rolling element 48 thereby transmitting the motion to the actuating lever 44. In turn the actuating lever 44 moves away from its from its original position thereby unlocking the tablet computer 16. In other words the actuating lever 44 translates the movement of the push button 42 for locking and unlocking the tablet computer 16.

With reference to FIG.7, the actuating lever 44 is a rod of rectangular cross section of inverted L shape structure, extending on the backside of the back wall 24 of the front enclosure portion 28. The snap 46 is provided in the midway portion of the actuating lever 44, which locks the tablet computer 16. In a locked condition, the snap 46 protrudes from the see through hole present in the back wall 24 and guide plate 36. In an unlocked condition, the snap 46 moves out from the see through hole in the back wall 24 and guide plate 36 as the actuating lever 44 moves away and thereby enabling the tablet computer 16 to come out easily from the housing assembly 14.

As seen in FIG.7, the front wall 20 extends downwards and obliquely rearwards, forming a substantial L shaped structure. The front wall 20 along with the back wall 24 forms a U shaped structure which facilitates in holding the tablet computer 16 within it. A dowel guide(s) 40 for locating the tablet computer 16 is a pip like protrusion on the base on the front wall 20 and is provided on both sides of the connector 56.

The front enclosure portion 28 base is provided with a cut out to accommodate the connector 56 and at least two dowel guides 40 positioned on either sides of said connector 56. The connector 56 is a pogo connector which electronically connects the tablet computer 16. The dowel guides 40 are exactly located on either sides of the connector 56 to exactly locate the tablet computer 16 to the pogo connector 56.

A friction hinge 58 is mounted between a stiffening member 54 and the retaining member(s) 38. In an exemplary embodiment, of the present invention the friction hinge 58 is a position control constant torque type hinge having smooth zero backlash operation. It is also a space efficient design which provides high torque in minimum space. The friction hinge 58 used in the present invention may not require adjusting. In an exemplary embodiment, the friction hinge 58 is made up of zinc alloy and steel. The friction hinge 58 may withstand about 1000 N maximum static load on radial load and about 1200 N maximum static load on axial load. The friction hinge 58 is selected for at least about 20,000 cycles performance within plus or minus 20% of static torque specification.

Operationally, the friction hinge 58 allows multiple viewing orientations of the tablet computer 16 making it easier to work with. The viewing orientation of the tablet computer 16 may vary from about 0 degree to about 70 degrees. It is to be understood that the range of viewing angle may vary depending on the selection of the friction hinge and design requirements.

Structurally, the friction hinge 58 includes two arms with a common shaft. One arm is mounted to the base of the front enclosure portion 28 through the stiffening member 54 and the other arm is mounted to the retaining member 38.

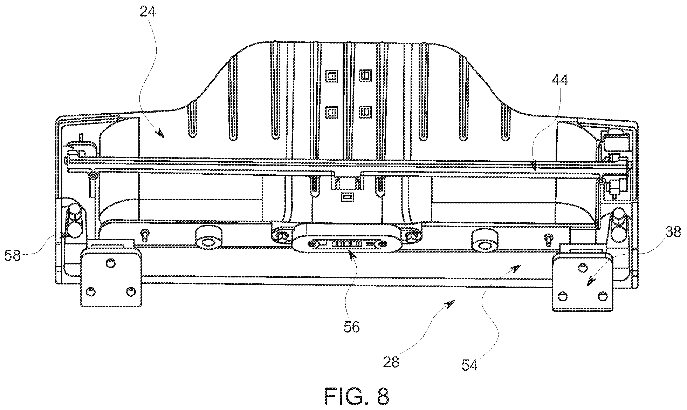

FIG.8 shows the back side of the front enclosure portion 28 in FIG.3 with back cover 30 removed. As mentioned above the actuating lever 44 extends horizontally from one end to the other end of the front enclosure portion 28. The stiffening member 54 is provided on the base of the front enclosure portion 28 for additional rigidity. The stiffening member 54 is of sheet metal. It is to be understood that the stiffening member 54 may vary in size and shape depending on the design constraints.

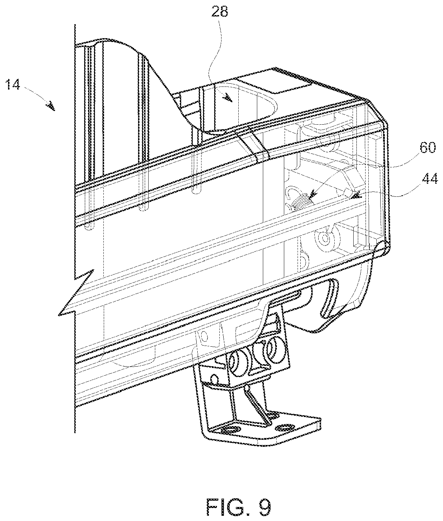

With reference to FIG. 9, the actuating lever 44 in FIG.6 of the locking subsystem 26 in FIG.2 is kept in its original position with the help of a retaining spring 60. The retaining spring 60 is mounted on two end of the actuating lever 44 and is mounted between the backside of the front enclosure portion 28 and the actuating lever 44. During unlocking condition when the actuating lever is moved away, the retaining spring 60 is protracted along with it. After the actuating lever 44 is moved away, the retaining spring 60 retracts back to its initial state thereby pulling back the actuating lever 44 to its original state.

In an exemplary embodiment,, the retaining spring 60 is an extension spring with ends of hook type and the retaining spring 60 includes a outside diameter of about 6.5mm, wire diameter of about 0.8mm, free length of about 16.0 mm, installed length of about 19.0mm (will have some pre tensions when installed), extended length of about 22.0 mm, minimum load of about 0.50 kgs, maximum load of about 4.0 kgs, spring rate of about 0.20 kg/mm. In one particular embodiment, the retaining spring 60 is of stainless steel material.

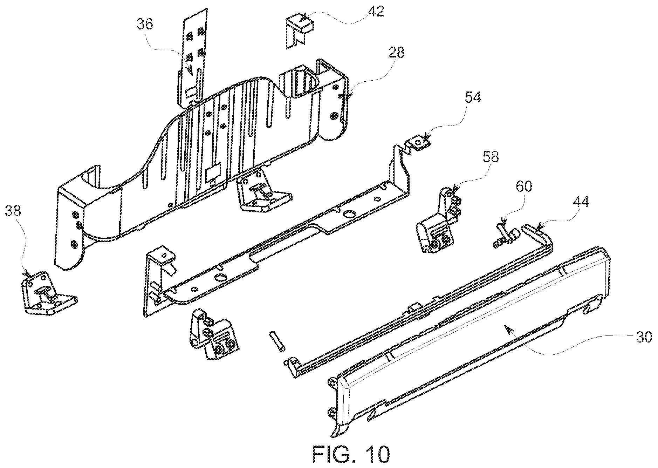

FIG. 10 is an exploded view of the housing assembly 14 in FIG.1. The housing assembly 14 includes front enclosure portion 28 (FIG.2), guiding plate 36 (FIG.3), retaining member(s) 38 (FIG.3), switching means 42 (FIG.6), stiffening member 54 (FIG.7), friction hinge 58 (FIG.7), retaining spring 60 (FIG.9), actuating lever 44 (FIG.6) and a back cover 30 (FIG.4).

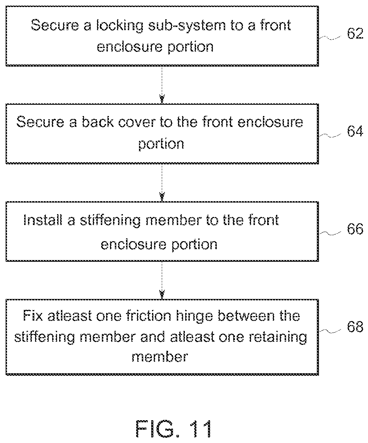

FIG.11, represents steps in an exemplary method of assembling the housing assembly 14 of the docking system 10 includes the steps of securing the locking sub-system 26 to the front enclosure portion 28 (in step 62). After the locking subsystem is fixed to the front enclosure portion, in step 64, the back cover 30 is fixed on the backside of the front enclosure portion 28. The stiffening member 54 is removably fixed to said base of front enclosure portion 28 in step 66. The friction hinge (s) 58 is mounted between the stiffening member 54 and the retaining member(s) 38 in step 68. The whole housing assembly is then mounted to the input-output module 12. In one of the embodiment, of the present invention, the securing of the locking sub-system 26 includes securing via at least one retaining member 38. In another embodiment, of the present invention, the back cover 30 is secured to the front enclosure portion 28 via screws as fixing means.

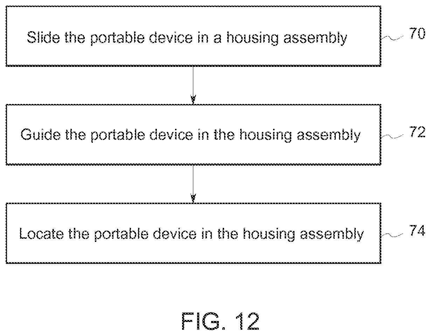

FIG.12 represents steps in an exemplary method of securing the portable device 16 to the housing assembly 14 in FIG.1. In the first step 70 the portable device 16 slides in the housing assembly 14. Once the portable device 16 is partially inside the housing assembly 14, it is furthermore guided with respect to the guiding plate 36 in step 72. As the portable device 16 reaches the bottom of the housing assembly 14, in step 74 the portable device 16 is located in the housing assembly 14 with the dowel guide(s) 40 on the base of the front enclosure portion 28. In one embodiment, of the present invention, the portable device 16 is guided in the housing assembly 14 via a guide plate 36 provided on the back wall 24 of the front enclosure portion 28. In another embodiment, of the present invention, the portable device 16 is located in the housing assembly 14 via at least two dowel guides 40 provided on the bottom rear end of the front wall 20.

The various embodiments of a docking system for a portable device described above thus provide a way to provide a modular, compact and portable docking system enables multiple viewing directions, helps in user handling and ergonomics.

Of course, it is to be understood that not necessarily all such objects or advantages described above may be achieved in accordance with any particular embodiment,. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. Similarly, the various features described, as well as other known equivalents for each feature, may be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications.

## Claims

1. A docking system for a portable device (16), said docking system comprising:
a housing assembly (14) disposed partially within an input-output module (12) and is operable between a plurality of viewing angles, wherein the housing assembly (14) comprises a front enclosure portion (28) with a base;
a locking sub-system (26) comprising a switching means (42) and an actuating lever (44), wherein the locking sub-system (26) is provided on said housing assembly (14) for locking said portable device (16) to said housing assembly (14), wherein the actuation of the switching means (42) unlocks the portable device (16) from the actuating lever (44);
at least one L shaped retaining member (38) coupling said housing assembly (14) to said input-output module (12), wherein the at least one L shaped retaining member (38) is indirectly secured to the base of the front enclosure portion (28);
**characterized by**
a stiffening member (54) removably fixed to said base of front enclosure portion (28);
a friction hinge (58) including two arms with a common shaft, wherein one of the two arms is mounted to the base of the front enclosure portion (28) through the stiffening member (54) and another of the two arms is mounted to the at least one L shaped retaining member (38), wherein the friction hinge (58) is mounted between the stiffening member (54) and the at least one L shaped retaining member (38); and
wherein the actuating lever (44) extends horizontally from one end to the other end of the front enclosure portion (28).

2. The docking system as claimed in claim 1, wherein the housing assembly (14) is operable at viewing angles in the range between about 0 to about 70 degrees..

3. The docking system as claimed in claim 1 or 2, wherein the housing assembly comprises a front enclosure portion (28) formed by front wall (20), side wall (32) and back wall (34) and a back cover (30) disposed on the backside of said front enclosure portion (28).

4. The docking system as claimed in claim 3, wherein the front enclosure portion (28) front wall (20) extends obliquely downward and rearward towards said back wall (34) forming a U-shaped structure.

5. The docking system as claimed in claim 3 or 4, wherein the front enclosure portion (28) is integrated in to one piece.

6. The docking system as claimed in one of claims 3 to 5, wherein the back wall (34) is provided with a guide plate (36).

7. The docking system as claimed in one of claims 3 to 6, wherein the front enclosure portion (28) base is provided with a cut out to accommodate a connector (56) and at least two dowel guides (40) positioned on either sides of said connector (56).

## Patentansprüche

1. Ein Andocksystem für eine tragbare Vorrichtung (16) umfassend:
eine Gehäuseanordnung (14), die teilweise innerhalb eines Eingabe-Ausgabe-Moduls (12) angeordnet ist und zwischen einer Mehrzahl von Betrachtungswinkeln betrieben werden kann, wobei die Gehäuseanordnung (14) einen vorderen Gehäuseteil (28) mit einer Basis aufweist;
ein Verriegelungs-Untersystem (26) mit einem Schalteinrichtung (42) und eine Betätigungshebel (44), wobei das Verriegelungs-Untersystem (26) an der Gehäuseanordnung (14) dazu vorgesehen ist, die tragbare Vorrichtung (16) an der Gehäuseanordnung (14) zu verriegeln, wobei die Betätigung der Schalteinrichtung (42) die tragbare Vorrichtung (16) vom Betätigungshebel (44) entsperrt;
mindestens ein L-förmiges Halteelement (38), das die besagte Gehäuseanordnung (14) an besagtes Eingabe-Ausgabe-Modul (12) koppelt, wobei mindestens ein L-förmiges Halteelement (38) indirekt an der Basis des vorderen Gehäuseteils (28) befestigt ist.
**gekennzeichnet durch**,
ein Versteifungselement (54), das abnehmbar an der Basis des vorderen Gehäuseteils befestigt ist (28);
ein Reibungsscharnier (58) mit zwei Armen, die einem gemeinsamen Schaft haben, wobei einer der beiden Arme durch das Versteifungselement (54) an der Basis des vorderen Gehäuseteils (28) angebracht ist und der andere der beiden Arme an dem mindestens einem L-förmigen Halteelement (38) angebracht ist, wobei das Reibungsscharnier (58) zwischen dem Versteifungselement (54) und dem mindestens einem L-förmigen Halteelement (38) angebracht ist; und
wobei sich der Betätigungshebel (44) horizontal von einem Ende zum anderen Ende des vorderen Gehäuseteils (28) erstreckt.

2. Das Andocksystem nach Anspruch 1, wobei die Gehäuseanordnung (14) bei Betrachtungswinkeln im Bereich von etwa 0 bis etwa 70 Grad funktionsfähig ist.

3. Das Andocksystem nach einem der Ansprüche 1 oder 2, wobei die Gehäuseanordnung ein vorderes Gehäuseteil (28) umfasst, das durch eine Vorderwand (20), eine Seitenwand (32) und Rückwand (34) und eine Rückabdeckung (30), die auf der Rückseite des besagten vorderen Gehäuseteils (28) angeordnet ist, gebildet wird.

4. Das Andocksystem nach Anspruch 3, wobei sich die Vorderwand (20) des vorderen Gehäuseteils (28) schräg nach unten und hinten in Richtung der Rückwand (34), die eine U-förmige Struktur bildet, erstreckt.

5. Das Andocksystem nach einem der Ansprüche 3 oder 4, wobei das vordere Gehäuseteil (28) in einem Stück integriert ist.

6. Das Andocksystem nach einem der Ansprüche 3 bis 5, bei dem die Rückwand (34) ist mit einer Führungsplatte (36) ausgestattet ist.

7. Das Andocksystem wie in einem der Ansprüche 3 bis 6, wobei die Basis des vorderen Gehäuseteils (28) mit einem Ausschnitt zur Aufnahme von einem Verbindungselement (56) und von mindestens zwei Dübelführungen (40) ausgestattet ist, und wobei sich die Dübelführungen auf beiden Seiten des besagten Verbindungselements (56) befinden.

## Revendications

1. Un système d'encrage pour un dispositif portable (16), ledit système d'encrage comprenant :
- Un ensemble d'encastrement (14) partiellement disposé dans un module d'entrée-sortie (12) et orientable entre plusieurs angles de vue, où l'ensemble d'encastrement (14) comprend une portion de fermeture frontale (28) avec une base ;
- Un sous-système de verrouillage (26) comprenant un moyen de commutation (42) et un levier d'activation (44), où le sous-système de verrouillage (26) est disposé sur ledit ensemble d'encastrement (14) pour verrouiller ledit dispositif portable (16) audit ensemble d'encastrement (14), où l'activation du moyen de commutation (42) déverrouille le dispositif portable (16) depuis le levier d'activation (44) ;
- Au moins un membre de maintien en forme de L (38) couplant ledit ensemble d'encastrement (14) audit module d'entrée-sortie (12), où ledit au moins un membre de maintien en forme de L (38) est fixé de manière indirecte sur la base de la portion de fermeture frontale (28) ;
**caractérisé par**
un membre de raidissement (54) fixé de manière amovible à ladite base de portion de fermeture frontale (28) ;
une charnière de friction (58) incluant deux bras avec un axe commun, où l'un des deux bras est monté sur la base de la portion de fermeture frontale (28) via le membre de raidissement (54) et un autre des deux bras est monté sur le au moins un membre de maintien en forme de L (38), où la charnière de friction (58) est montée ente le membre de raidissement (54) et le au moins un membre de maintien en forme de L (38) ; et
où le levier d'activation (44) s'étend horizontalement depuis une extrémité jusqu'à l'autre extrémité de la portion de fermeture frontale (28).

2. Le système d'encrage selon la revendication 1, où l'ensemble d'encastrement (14) est orientable à des angles de vue dans la gamme entre environ 0 et environ 70 degrés.

3. Le système d'encrage selon la revendication 1 ou 2, où l'ensemble d'encastrement (14) comprend une portion de fermeture frontale (28) formée par une paroi frontale (20), une paroi latérale (32) et une paroi arrière (34) et un fond (30) disposé sur l'arrière de ladite portion de fermeture frontale (28).

4. Le système d'encrage selon la revendication 3, où la paroi frontale (20) de la portion de fermeture frontale (28) s'étend obliquement vers le bas et vers l'arrière vers ladite paroi arrière (34) formant une structure en forme de U.

5. Le système d'encrage selon les revendications 3 ou 4, où la portion de fermeture frontale (28) est intégrée en une pièce.

6. Le système d'encrage selon l'une des revendications 3 à 5, où la paroi arrière (34) est pourvue d'une plaque guide (36).

7. Le système d'encrage selon l'une des revendications 3 à 5, où la base de la portion de fermeture frontale (28) est pourvue d'un évidement pour placer un connecteur (56) et au moins deux guides broche (40) disposés de chaque côté dudit connecteur (56).
